# EUROPEAN PATENT APPLICATION

(11) **EP 4 760 967 A1**
(43) Date of publication of application: **17.06.2026**
(21) Application number: 24882880.8
(22) Date of filing: 24.10.2024
(51) Int. Cl.: H01M 50/538, H01M 10/04, H01M 50/179, H01M 50/152

(54) **STRUCTURALLY STABLE CURRENT COLLECTING PLATE AND CYLINDRICAL BATTERY CELL USING SAME**

(30) Priority: 24.10.2023 KR 20230142672
(71) Applicant: LG Energy Solution, Ltd., Seoul 07335 (KR)
(72) Inventor: LEE, Taemin, Daejeon 34122 (KR); HWANG, Yujeong, Daejeon 34122 (KR); KIM, Younjoong, Daejeon 34122 (KR)
(74) Representative: Goddar, Heinz J.
(86) International application number: PCT/KR2024/016346
(87) International publication number: WO 2025/089853

(57) **Abstract**

Provided is a current collecting plate that is connected to an electrode tab provided at one end among the two ends of the electrode assembly in the axial direction, wherein the one end is inserted into a can while facing the bottom thereof. The current collecting plate comprises: a terminal joint part that has one side surface joined to a cap, the bottom of the can, or an electrode terminal; an electrode joint part that surrounds the terminal joint part from the outside of the terminal joint part in the radial direction and has the other side connected to the electrode tab of the electrode assembly; elastic connection parts that are disposed between the electrode joint part and the terminal joint part and electrically connect the electrode joint part and the terminal joint part; and an opening that is disposed between the elastic connection parts adjacent in the circumferential direction and separates the electrode joint part and the terminal joint part in the radial direction or the axial direction.

## Description

### [TECHNICAL FIELD]

This application claims the benefit of priority based on Korean Patent Application No. 10-2023-0142672 filed on October 24, 2023, entire content disclosed in the document of the patent applications is included as a part of this specification.

The present invention relates to a current collecting plate that may be applied to a cylindrical battery cell. More specifically, the present invention relates to a current collecting plate bonded to an electrode tab provided at one of the two axial ends of an electrode assembly facing the bottom of the can.

### [BACKGROUND ART]

The process of manufacturing a battery cell using a cylindrical can includes the steps of: subjecting a metal sheet to deep drawing to form a circular bottom portion and a circular tubular side wall connected thereto; accommodating an electrode assembly therein; and then covering the open end of the sidewall member with a cap.

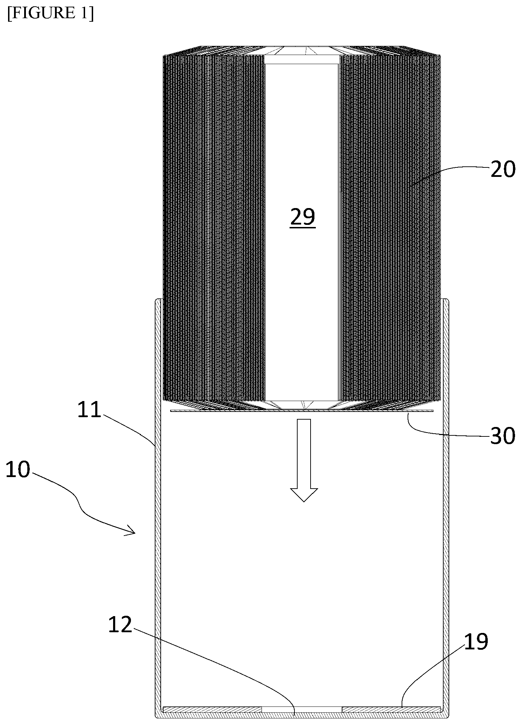

Referring to FIG. 1, before accommodating the electrode assembly 20 in the can 10, a collecting plate 30 may be bonded to the lower axial end of the electrode assembly. When the electrode assembly 20 is inserted into the can 10, the current collecting plate 30 faces the bottom surface 12 of the cylindrical can.

However, since the center of the current collecting plate 30 is closed, the hollow portion 29 of the electrode assembly 20 is blocked. Consequently, when the electrode assembly 20 is placed in the can 10, the current collecting plate 30 prevents air inside the can 10 from being discharged to the outside through the hollow portion 29 of the electrode assembly 20. This phenomenon interferes with the process of inserting the electrode assembly 20 into the can 10.

Meanwhile, to facilitate resistance welding between the center of the current collecting plate 30 and the can bottom 12, an electrically insulating insulator 19 is interposed between the collecting plate and the can bottom, excluding the center. While the insulator 19 has a predetermined thickness, the current collecting plate is flat. Therefore, the collecting plate must be pressed firmly against the can bottom with a welding electrode to ensure close contact with the can bottom.

During such process, the collecting plate 30 is excessively deformed, and the welding area becomes pre-tensioned, making it unstable. Furthermore, vibrations or shocks generated during the use of the battery cell may affect the welding area, potentially causing the same to fall off or cracks in the collecting plate 30. This is because repeated and continuous tension and stress may cause fatigue failure.

When such phenomenon occurs, the electrical connection may be damaged, potentially leading to the loss of battery cell function.

### [DISCLOSURE]

### [TECHNICAL PROBLEM]

In order to solve the above-described problems, it is an object of the present invention to provide a structure of a collecting plate and a battery cell employing the same that does not impede the flow of air into the hollow portion of the electrode assembly, thereby facilitating a smooth electrode assembly insertion process.

It is an object of the present invention to provide a structure of a collecting plate and a battery cell employing the same wherein crack or fatigue failure is not generated even when subjected to continuous shock or vibration.

It is an object of the present invention to provide a structure of a collecting plate and a battery cell employing the same that is easily deformed during the welding process, thereby facilitating a smooth welding process and preventing pretensioning during welding.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention may be applied to a current collecting plate according provided with: a first side surface bonded to a cap, a can bottom or an electrode terminal; and a second side surface electrically bonded to an electrode tab of an electrode assembly.

The current collecting plate includes a terminal joint provided at the center thereof and an electrode joint surrounding the terminal joint from a radially outer side of the terminal joint.

The first side surface of the terminal joint is bonded to the cap, the can bottom or the electrode terminal. The bonding may be established, for example, by resistance welding. However, the bonding method is not necessarily limited thereto.

A second side surface of the electrode joint is bonded to an electrode tab of an electrode assembly. The bonding may be established, for example, by laser welding. However, the bonding method is not necessarily limited thereto.

Other bonding methods such as soldering or brazing may be applied.

The electrode joint and the terminal joint are electrically connected to each other by an elastic connecting portion disposed therebetween.

The elastic connecting portion may surround a portion of or the entirety of the inner circumference of the electrode joint and/or the outer circumference of the terminal joint in circumferential direction.

Preferably, a plurality of elastic connecting portions are provided, and each of the plurality of elastic connecting portions may surround a portion of or the entirety of the inner circumference of the electrode joint and/or the outer circumference of the terminal joint in circumferential direction.

Preferably, the plurality of elastic connecting portions may be spaced apart from each other in circumferential direction.

An open portion may be disposed between circumferentially adjacent elastic connecting portions.

The open portion separates the electrode joint and the terminal joint in radial and/or axial direction.

The elastic connecting portion includes at least one of: a first connecting section provided with an outer radial end and an inner radial end and extending radially inward toward a first axial side (axially outer side); and a second connecting section provided with an outer radial end and an inner radial end and extending radially inward toward a second axial side (axially inner side).

The elastic connecting portion may include one or two or more first connecting sections.

The elastic connecting portion may include one or two or more second connecting sections.

The elastic connecting portion may include one or two or more first connecting sections and one or two or more second connecting sections.

The first and second ends of the elastic connecting portion may be connected to the electrode joint and the terminal joint, respectively.

The elastic connecting portion may extend from the electrode joint toward the terminal joint.

In one embodiment, the first connecting section and the second connecting section of the elastic connecting portion may be alternately arranged along an extending direction. As a result, a spring structure in radial direction or a spring structure in axial direction or combinations thereof may be embodied.

The inner radial end of the first connecting section and the outer radial end of the second connecting section adjacent to each other along the extending direction of the elastic connecting portion may be connected to each other. As a result, the spring structure in radial direction may be embodied.

In addition, the inner radial end of the second connecting section and the outer radial end of the first connecting section adjacent to each other along the extending direction of the elastic connecting portion may be connected to each other. As a result, a longer spring structure in radial direction may be embodied.

The inner radial ends of the first and second connecting sections adjacent to each other along an extending direction of the elastic connecting portion may be connected to each other. As a result, the spring structure in axial direction may be embodied.

In addition, the outer radial ends of the first and second connecting sections adjacent to each other along the extending direction of the elastic connecting portion may be connected to each other. As a result, a longer spring structure in axial direction may be embodied.

In another embodiment, the second connecting section and the first connecting section of the elastic connecting portion may be alternately arranged as the elastic connecting portion extends from the electrode joint toward the terminal joint. As a result, the spring structure in radial direction may be embodied.

The inner radial end of the second connecting section and the outer radial end of the first connecting section adjacent to each other along the extending direction of the elastic connecting portion may be connected to each other. As a result, the spring structure in radial direction may be embodied.

In addition, the inner radial end of the first connecting section and the outer radial end of the second connecting section adjacent to each other along an extending direction of the elastic connecting portion may be connected to each other. As a result, a longer spring structure in radial direction may be embodied.

In another embodiment, the first connecting section of the elastic connecting portion having different slopes may be arranged as the elastic connecting portion extend from the electrode joint toward the terminal joint.

Preferably, the different slopes of the first connecting section may increase gradually along an extending direction.

Preferably, the different slopes of the first connecting sections decrease gradually in an extending direction.

Preferably, the different slopes of the first connecting sections repeatedly increase and decrease in an extending direction.

The terminal joint may include a flat circular plate shape. However, it is not necessary that the shape is circular. It is also not necessary that the shape is flat plate.

The terminal joint may include a flat plate annular shape. However, it is not necessary that the shape is flat plate. It is also not necessary that the shape is "O" shape of closed loop. The annular shape may be "C" shape of open loop.

The current collecting plate may be bonded to an electrode tab provided at the first axial end of the electrode assembly.

The present invention provides a battery cell employing the current collecting plate.

The battery cell may be cylindrical.

The battery cell includes: a can provided with a bottom member and a sidewall member; an electrode assembly accommodated in the can; and a cap covering an open end of the can with the electrode assembly accommodated therein.

The battery cell further includes an electrode terminal.

The electrode terminal may be provided at the bottom member or the cap.

The electrode terminal may be insulated from and fixed to the bottom member.

The first side surface of the current collecting plate is bonded to the cap, the bottom member of the can or the electrode terminal, and the second side surface of the current collecting plate is electrically connected to an electrode tab provided at a first axial side of the electrode assembly.

### [ADVANTAGEOUS EFFECTS]

The current collecting plate according to the present invention includes an elastic connecting portion that is easily deformed during the welding process, thereby facilitating a smooth welding process and preventing pretensioning during welding. Accordingly, even when subjected to vibration or shock, tension or stress imposed on the welding area and the current collecting plate connected thereto may be minimized.

The current collecting plate according to the present invention is provided with an elastic connecting portion, thereby preventing cracks or fatigue failure even when subjected to continuous shock or vibration. Accordingly, stability may be maintained even with continuous, long-term use.

The current collecting plate according to the present invention allows smooth flow of fluid through the open portion. Accordingly, the process of inserting an electrode assembly into a can is facilitated.

In addition to the advantageous effects described above, specific effects of the present invention will be described further while describing specific details of the present invention.

### [BRIEF DESCRIPTION OF DRAWINGS]

FIG. 1 is a cross-sectional view illustrating an electrode assembly being inserted into a can.
FIG. 2 is an exploded perspective view of the electrode assembly accommodated in the can of FIG. 1 before winding.
FIG. 3 is a perspective view of the electrode assembly of FIG. 2 stacked before winding.
FIG. 4 is a perspective view of the laminate of FIG. 3 assembled into a cylindrical jelly-roll electrode assembly by winding.
FIG. 5 is a perspective view illustrating a first current collecting plate bonded to an electrode tab provided at a first axial end of the electrode assembly facing the bottom of the can.
FIG. 6 is a cross-sectional view illustrating the electrode assembly of FIG. 5 inserted into the can with the first current collecting plate welded to the bottom of the can by resistance welding.
FIG. 7 is a cross-sectional view illustrating an open end of the can sealed with a cap assembly with an electrode tab provided at a second axial end of the electrode assembly inserted in the can connected to the cap assembly by a second collector plate.
FIG. 8 is a perspective view of the cylindrical battery cell of FIG. 7 according to a first embodiment.
FIGS. 9 and 10 are perspective and plan views of the first current collecting plate according to the first embodiment shown in FIG. 5, respectively.
FIG. 11 is a cross-sectional view taken along the lines .11.-.11. of FIG. 10.
FIG. 12 is a cross-sectional view taken along the lines .12.-.12. of FIG. 10.
FIG. 13 is an enlarged view of the boxed area .13. of FIG. 11.
FIGS. 14 and 15 are perspective and enlarged views of the first current collecting plate according to a second embodiment, respectively.
FIGS. 16 and 17 are perspective and enlarged views of the first current collecting plate according to a third embodiment, respectively.
FIGS. 18 and 19 are perspective and enlarged views of the first current collecting plate according to a fourth embodiment, respectively.
FIGS. 20 and 21 are perspective views and enlarged views of the first current collecting plate according to a fifth embodiment, respectively.
FIGS. 22 and 23 are perspective views and enlarged views of the first current collecting plate according to a sixth embodiment, respectively.
FIGS. 24 and 25 are perspective views and enlarged views of the first current collecting plate according to a seventh embodiment, respectively.
FIGS. 26 and 27 are perspective views and enlarged views of the first current collecting plate according to an eighth embodiment, respectively.
FIGS. 28 and 29 are perspective views and enlarged views of the first current collecting plate according to a ninth embodiment, respectively.
FIGS. 30 and 31 are perspective views and enlarged views of the first current collecting plate according to a tenth embodiment, respectively.
FIGS. 32 and 33 are perspective views and enlarged views of the first current collecting plate according to an eleventh embodiment, respectively.
FIGS. 34 and 35 are perspective views and enlarged views of the first current collecting plate according to a twelfth embodiment, respectively.
FIG. 36 is a perspective view of the cylindrical battery cell according to the second embodiment.
FIGS. 37 and 38 are perspective views of the electrode assembly to be accommodated in the cylindrical battery cell of FIG. 36.
FIG. 39 is a cross-sectional view illustrating a process of accommodating the electrode assembly of FIG. 37 in a can.
FIG. 40 is a cross-sectional view illustrating a process of welding the first current collecting plate to a first electrode terminal of FIG. 39.
FIG. 41 is a cross-sectional view illustrating the open end of the can sealed with the cap assembly with the electrode tab provided at the second axial end of the electrode assembly inserted in the can connected to the cap assembly.

### [DESCRIPTION OF REFERENCE NUMERALS]

10: can
11: sidewall member
113: beading
115: crimped portion
12: bottom member, bottom surface, bottom
13: first electrode terminal (anode terminal)
14: gasket
15: second electrode terminal
16: cap assembly
161: electrode terminal
163: vent
165: current interrupting disk (CID)
167: gasket
168: insulating spacer
19: insulator
20: electrode assembly
21: first electrode
22: second electrode
23: metal foil
24: active material layer
25: coated portion
26: non-coated portion
27: electrode tab (notched tab)
28: separator
29: hollow portion
30: first current collecting plate (bottom side current collecting plate)
31: terminal joint
33: electrode joint
34: through-hole
35: elastic connecting portion
36, 36-1, 36-2, 36-3: first connecting section
37, 37-1, 37-2: second connecting section
39: open portion
40: second collector plate (open end side current collecting plate)
41: Inner ring part
42: hole
43: electrode connecting portion
44: can connecting portion
R: welding electrode

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends", and "radial direction" refers to "a direction toward or away from the axis," and "circumferential direction" refers to "a direction surrounding the axis."

### [CYLINDRICAL BATTERY CELL - FIRST EMBODIMENT]

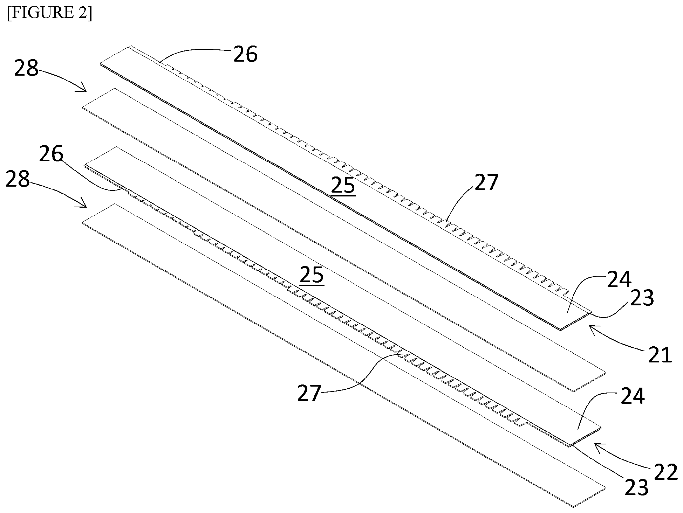

Referring to FIGS. 2 to 8, a cylindrical battery cell according to a first embodiment includes: an electrode assembly 20; a current collecting plates 30 and 40 electrically connected to the electrode assembly 20; and a can 10 accommodating the electrode assembly 20 and the current collecting plates 30 and 40.

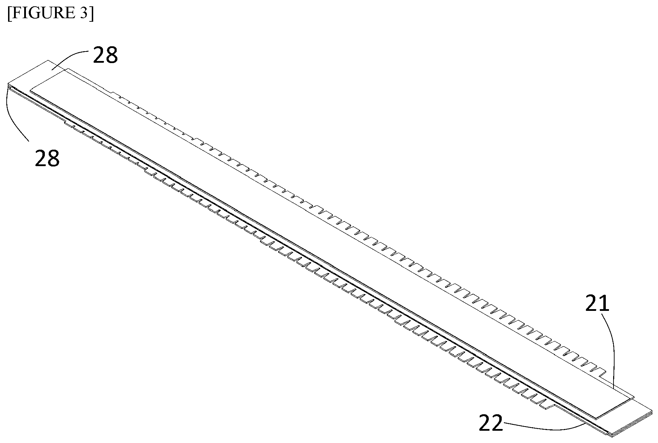

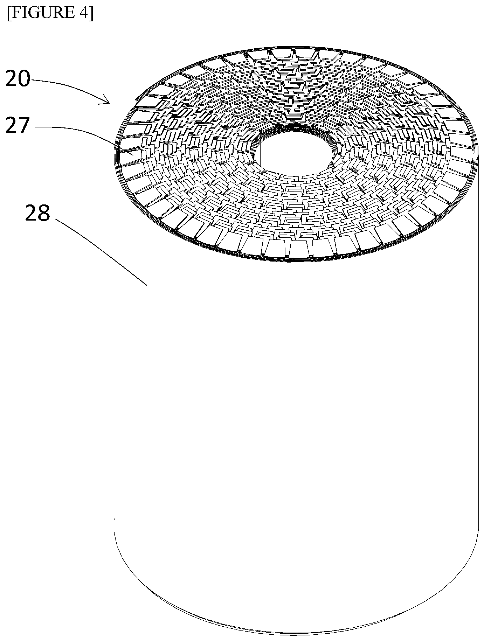

The electrode assembly 20 is manufactured by preparing a first electrode 21, a second electrode 22, and a separator 28 that have a predetermined width and extend in a lengthwise direction as shown in FIG. 2, and forming a laminate by sequentially stacking the first electrode 21, the separator 28, the second electrode 22, and the separator 28 as shown in FIG. 3, and winding the laminate into a jelly-roll form around a core shaft as shown in FIG. 4.

The first electrode 21 may be an anode, and the second electrode 22 may be a cathode, or vice versa.

The first electrode 21 and the second electrode 22 are manufactured in the form of sheets. The electrode sheet is manufactured by applying an active material layer 24 to the surface of a metal foil 23. The electrode sheet has a coated portion 25 where the active material layer 24 is applied, and a non-coated portion 26 without the active material layer 24. The anode sheet has a non-coated portion 26 at first widthwise end thereof, and the cathode sheet has a non-coated portion 26 at a second widthwise end thereof.

The non-coated portion 26 is exposed or protrude in the widthwise direction from the laminate. The non-coated portion 26 itself functions as an electrode tab 27.

The non-coated portion 26 may be provided with notches at a predetermined interval to form notched tabs 27 in the shape of a flag.

In the embodiment, the notched tabs 27 having a shape of an isosceles trapezoid are exemplified. However, the notched tabs 27 may have various shapes such as a semicircle, a semi-ellipse, a triangle, a rectangle, a parallelogram, etc.

In addition, in the embodiment, the notched tabs 27 having the same width and arranged along the lengthwise direction are exemplified. However, the width of the notched tabs may be gradually or stepwisely increased from the core toward the outer circumference.

In addition, in the embodiment, the notched tabs 27 with gradually increasing height from the core toward the outer circumference are exemplified. However, the height of the notched tabs may be a constant or may decrease gradually.

In addition, in the embodiment, exemplified is a structure with notched tabs 27 removed from predetermined sections of the centripetal end and the centrifugal end of the non-coated portion 26. However, it is also apparent that the notched tabs may be not removed from the centripetal end of the non-coated portion, and the notched tabs may not be removed from the centrifugal end of the non-coated portion.

In the jelly-roll type electrode assembly 20, the notched tab 27 may be bent in the radial direction and flattened as shown in FIG. 4. The notched tab 27 may be bent radially inward or radially outward. In the embodiment, exemplified is a structure with the notched tabs 27 bent radially inward.

The notched tabs 27 may be bent one by one during the process of forming the jelly-roll type electrode assembly 20 by winding the laminate. Alternatively, the notched tabs 27 may be bent all at once after the jelly-roll type electrode assembly is formed by winding the laminate.

The notched tabs 27 of the first electrode 21 and the notched tabs 27 of the second electrode 22 that are folded and overlapped in the radial direction may provide planes substantially perpendicular to the axial direction at two axial ends of the electrode assembly 20, respectively.

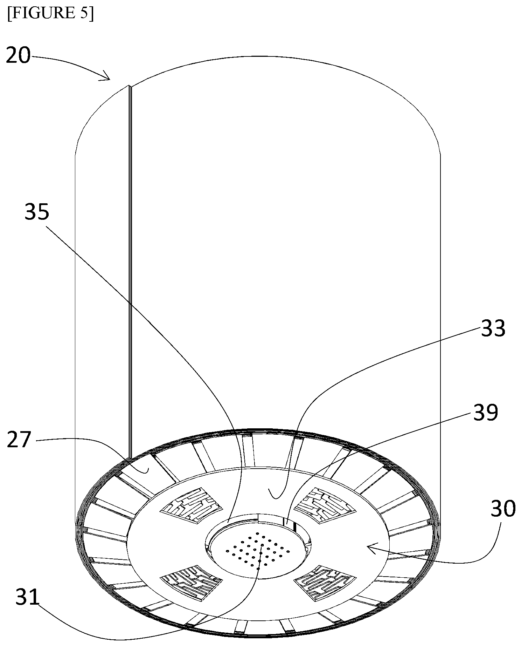

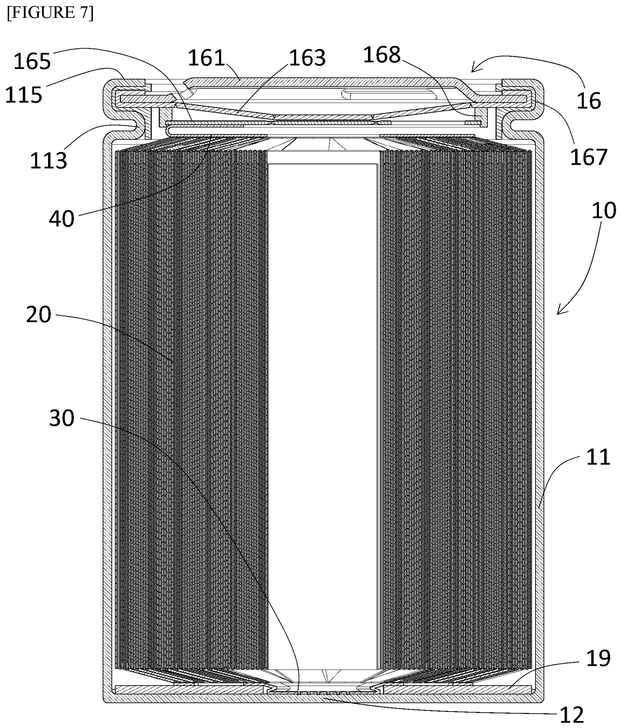

As shown in FIGS. 5 and 7, the first current collecting plate 30 and the second current collecting plate 40 may be bonded to the substantially flat surfaces provided by the notched tabs 27 exposed at the two axial ends of the electrode assembly 20, respectively.

In the embodiment, the first current collecting plate 30 is an anode current collecting plate, and the second current collecting plate 40 is a cathode current collecting plate. However, the first current collecting plate 30 may be a cathode current collecting plate, and the second current collecting plate 40 may be an anode current collecting plate.

The second current collecting plate 40 may include aluminum material, and the first current collecting plate 30 may include copper material. However, the material is not limited thereto.

The current collecting plates 30 and 40 may be manufactured by punching, trimming, piercing and bending a metal sheet.

The can 10 includes: a bottom member 12; a sidewall member 11 extending axially and connected to the bottom member 12; and a cap assembly 16 covering the open end of the sidewall member 11.

The bottom member 12 may have a disk shape, and the side wall member 11 may have a circular tube shape.

The bottom member 12 and the side wall member 11 may be manufactured by subjecting a metal sheet with nickel plated on the surface of steel to deep drawing, and trimming the front end of the side wall member 11 with a punch while holding the same with a blank holder. Apparently, the material of the can 10 is not limited thereto.

According to the first embodiment of the cylindrical battery cell, the first current collecting plate 30 is bonded to the first axial end, i.e., the bottom, of the electrode assembly 20. Such bonding may be established, for example, by irradiating the surface of the first current collecting plate 30 with a laser to weld the back surface of the first current collecting plate 30 to the electrode tab 27.

The first current collecting plate 30 may be electrically connected to the electrode tab 27 of the first electrode 21 of the electrode assembly 20.

The first current collecting plate 30 includes: a terminal joint 31 provided at the center; and an annular electrode joint 33 surrounding the terminal joint 31. The terminal joint 31 and the electrode joint 33 are interconnected via an elastic connecting portion 35.

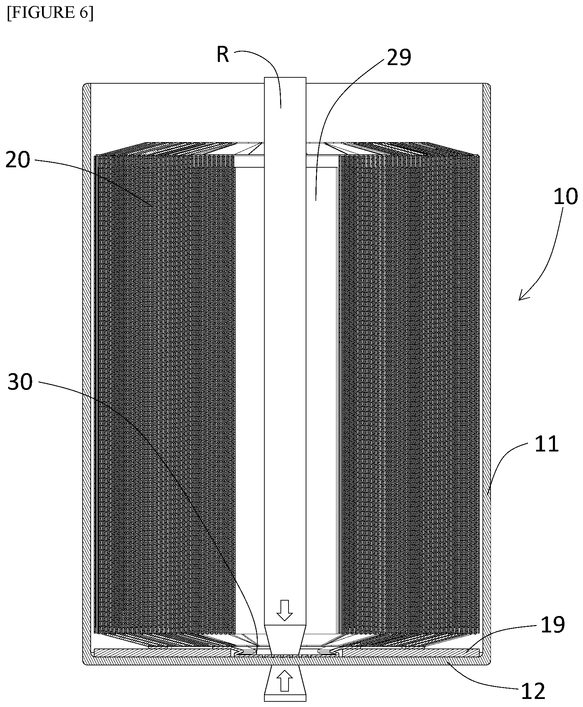

Referring to FIG. 6, the first current collecting plate 30 may face the bottom 12 of the can 10, and the electrode assembly 20 may be accommodated in the can 10.

The first current collecting plate 30 is provided with a plurality of elastic connecting portions 35. The plurality of elastic connecting portions may be spaced apart from each other in the circumferential direction.

The space between two circumferentially adjacent elastic connecting portions 35 constitutes an open portion 39. The open portion 39 connects the space under the first current collecting plate 30 with the hollow portion 29 of the electrode assembly 20. Accordingly, air resistance does not occur when the electrode assembly 20 is placed in the can 10.

An insulator 19 may be interposed between the first current collecting plate 30 and the bottom of the can 10. The insulator 19 prevents the electrode joint 33 of the first current collecting plate 30 from coming into direct contact with the bottom 12 of the can 10 and forming an electrical connection. Accordingly, smoother resistance welding may be achieved between the terminal joint 31 of the first current collecting plate 30 and the bottom 12 of the can 10.

The insulator 19 may be made of a vibration-absorbing material. Accordingly, even when the bottom 12 of the can 10 vibrates, the vibration may be prevented from being directly transmitted to the electrode assembly 20 through the electrode joint 33 of the first current collecting plate 30.

With the electrode assembly 20 accommodated in the can 10, an welding electrode R may approach the back of the terminal joint 31 through the open end of the can 10 and the hollow portion 29 of the electrode assembly 20. Accordingly, welding may be performed between the terminal joint 31 of the first current collecting plate 30 and the bottom of the can 10. Apparently, the welding method of the present invention is not limited to resistance welding. Ultrasonic welding or laser welding may also be applied.

Referring to FIG. 7, after welding the first current collecting plate 30 to the can 10, a beading 113 may be formed at the end of the sidewall member 11. The second axial end of the electrode assembly 20 and the cap assembly 16 may be electrically connected via the second collector plate 40. Accordingly, the second electrode 22 of the electrode assembly 20 may be electrically connected to the electrode terminal 161 of the cap assembly 16 via the second collector plate 40.

Preferably, the cap assembly 16 may further include a current interrupting disk (CID) 165. The first end of the second collector plate 40 may be bonded to the electrode tab 27 of the electrode assembly 20, and the second end may be bonded to the current interrupting disk 165 of the cap assembly 16.

Preferably, the cap assembly 16 may further include a vent 163 having a center bonded and electrically connected to the current interrupting disk 165.

Preferably, the cap assembly 16 may further include an insulating spacer 168 that insulates the periphery of the current interrupting disk 165 from the vent 163.

The edge of the vent 163 and the edge of the electrode terminal 161 overlap in the axial direction and are placed on the beading 113. The edge of the vent 163 and the edge of the electrode terminal 161 seal and are fixed to the beading 113 and crimped portion 115.

Since the edge of the vent 163 and the edge of the electrode terminal 161 are sealed and secured via the gasket 167, the can 10 and the cap assembly 16 are electrically insulated from each other.

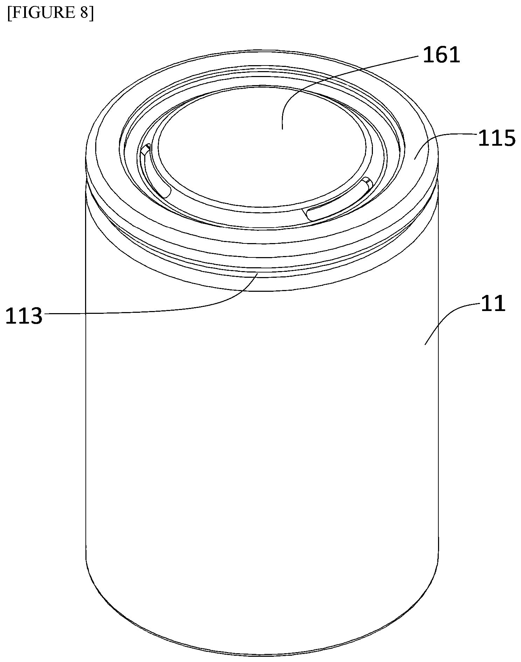

Referring to FIG. 8, the can 10 of the cylindrical battery cell has a first polarity corresponding to the first electrode 21 of the electrode assembly 20, and the electrode terminal 161 is disposed at the upper center of the cylindrical battery cell and has a second polarity corresponding to the second electrode 22 of the electrode assembly 20.

### [FIRST CURRENT COLLECTING PLATE]

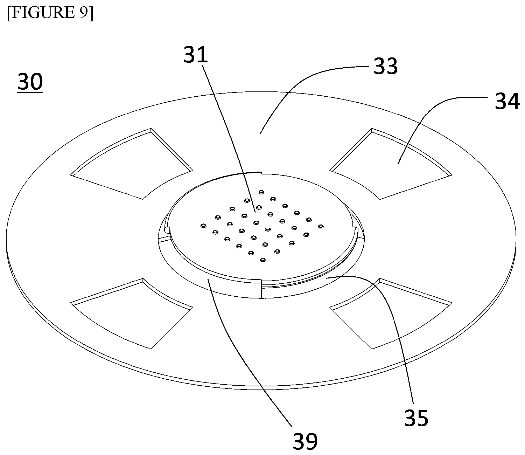

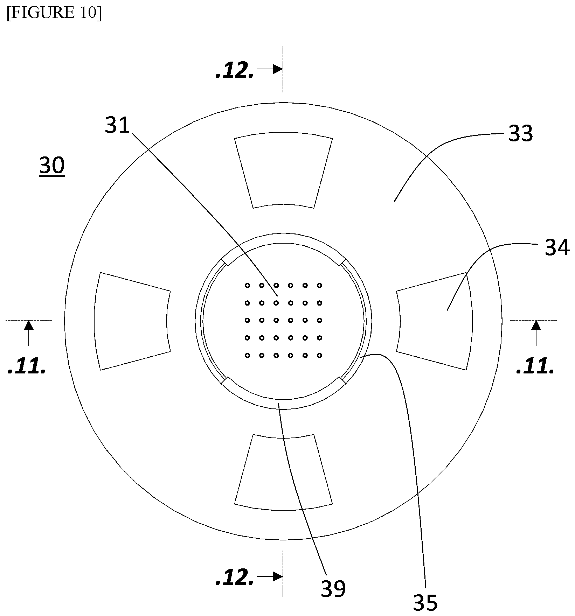

Hereinafter, various embodiments of the first current collecting plate 30 will be described with reference to FIGS. 8 through 35.

### <FIRST EMBODIMENT>

Referring to FIGS. 8 to 13, the first current collecting plate 30 according to the first embodiment includes: a terminal joint 31 provided at the center; an electrode joint 33 spaced apart from and surrounding the terminal joint 31; an elastic connecting portion 35 electrically connecting the terminal joint 31 and the electrode joint 33; and an open portion 39 separating the terminal joint 31 and the electrode joint 33.

The electrode joint 33 has a flat annular shape. The outer diameter of the electrode joint 33 is smaller than that of the electrode assembly 20.

The electrode joint 33 is provided with a plurality of through-holes 34 along the circumferential direction. Four through-holes 34 provided at 90-degree intervals are exemplified in the embodiment. However, the number of through-holes 34 is not limited thereto, and the circumferential gap between the through-holes 34 are not necessarily equidistant.

The through-hole 34 has a sector shape. However, the shape of the through-holes 34 is not necessarily limited thereto.

The through-holes 34 improve electrolyte impregnation and reduce the weight of the first current collecting plate 30.

Between two circumferentially adjacent through-holes 34, the electrode joint 33 is electrically connected by bonding to the electrode tab 27 of the first electrode 21 of the electrode assembly 20. Preferably, as described above, the bonding may be achieved by laser welding. According to the embodiment, the bonding points may be four, spaced 90 degrees apart in the circumferential direction.

The terminal joint 31 is disposed radially inner than the electrode joint 33, and is spaced radially and axially from the electrode joint 33.

The terminal joint 31 may be subjected to multiple punching processes to facilitate resistance welding to the bottom 12 of the can 10 and to increase contact resistance therebetween.

The terminal joint 31 has a circular flat plate shape.

A plurality of elastic connecting portions 35 are provided. The elastic connecting portions 35 may be spaced apart from each other along the circumferential direction. The elastic connecting portions 35 may be equally spaced apart along the circumferential direction. Two elastic connecting portions 35 having a circumferential width of 90 degrees provided at 180 degrees intervals are exemplified in the embodiment. However, the number, the circumferential width, and the circumferential gap of the elastic connecting portions 35 are not necessarily limited thereto.

The space between two circumferentially adjacent elastic connecting portions 35 is defined as the open portion 39. A plurality of open portions 39 may be provided, which may correspond to the number of elastic connecting portions 35. Two open portions 39 having a circumferential width of 90 degrees provided in 180-degree intervals are exemplified in the embodiment. However, the number, the circumferential width and the circumferential gap of the open portions 39 are not necessarily limited thereto.

The open portion 39 allows gas flow therethrough. Therefore, when the electrode assembly 20 bonded to the first current collecting plate 30 is inserted into the can 10, the phenomenon of air resistance interfering with the insertion of the electrode assembly 20 may be minimized.

The elastic connecting portion 35 extends from the electrode joint 33 toward the terminal joint 31 and electrically connects the electrode joint 33 and the terminal joint 31.

According to the first embodiment of the first current collecting plate 30, the elastic connecting portion 35 includes: a first connecting section 36 provided with an outer radial end and an inner radial end and extending radially inward toward a first axial side (axially outer side); and a second connecting section 37 provided with an outer radial end and an inner radial end and extending radially inward toward a second axial side (axially inner side).

In the elastic connecting portion 35, the first connecting section 36 and the second connecting section 37 are alternately arranged along the extending direction.

In the elastic connecting portion 35, the outer radial end of the first connecting section 36 is connected to the inner radial end of the electrode joint 33.

In the elastic connecting portion 35, the inner radial end of the first connecting section 36 is connected to the inner radial end of the second connecting section 37.

In the elastic connecting portion 35, the outer radial end of the second connecting section 37 is connected to the outer radial end of the terminal joint 31.

The outer radial end of the second connecting section 37 may be disposed radially inner than that of the first connecting section 36.

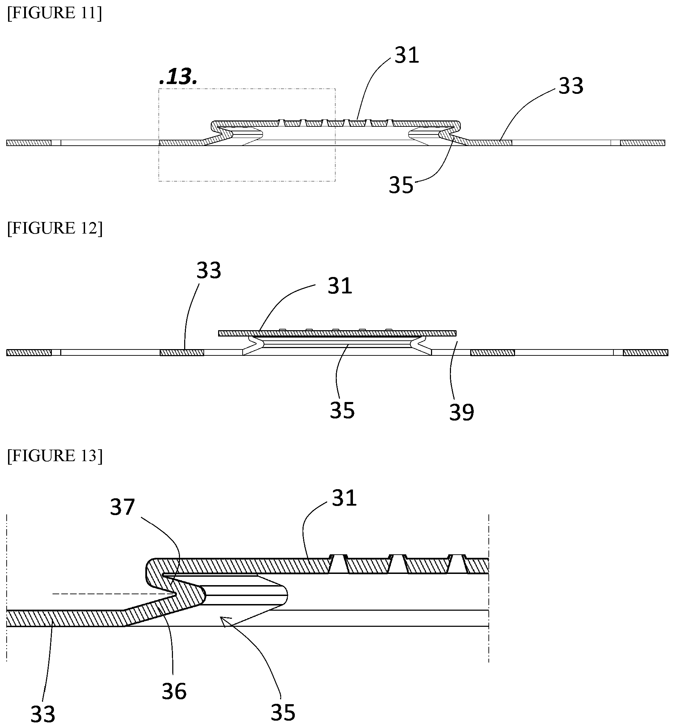

Referring to the dotted line in FIG. 13, the shape of the elastic connecting portion 35 may be a type of spring structure in the axial direction.

Accordingly, even when the terminal joint 31 is bonded to the bottom 12 of the can 10, the vibration and shock of the can 10 are not directly transmitted to the electrode joint 33. The elastic connecting portion 35 dampens vibration and absorbs shock.

The elastic connecting portion 35 allows a change in the relative axial position of the terminal joint 31 with respect to the electrode joint 33. Furthermore, the elastic connecting portion 35 also allows a change in the relative radial position of the terminal joint 31 with respect to the electrode joint 33.

When the welding electrode R presses the terminal joint 31 axially outward to perform resistant welding of the terminal joint 31 to the bottom 12 of the can 10, the elastic connecting portion 35 naturally deforms elastically. This minimizes pretensioning between the terminal joint 31 and the electrode joint 33.

The elastic connecting portion 35 is disposed along the path through which vibration or external shock applied to the can 10 is transmitted to the electrode joint 33 via the terminal joint 31. The elastic connecting portion 35 naturally deforms elastically in response to the vibration or shock. This minimizes the magnitude of tensile or compressive stress repeatedly and continuously applied to the connecting portion of the terminal joint 31 and the electrode joint 33.

The first embodiment of the cylindrical battery cell is exemplified with the first embodiment of the first current collecting plate applied thereto.

### <SECOND EMBODIMENT>

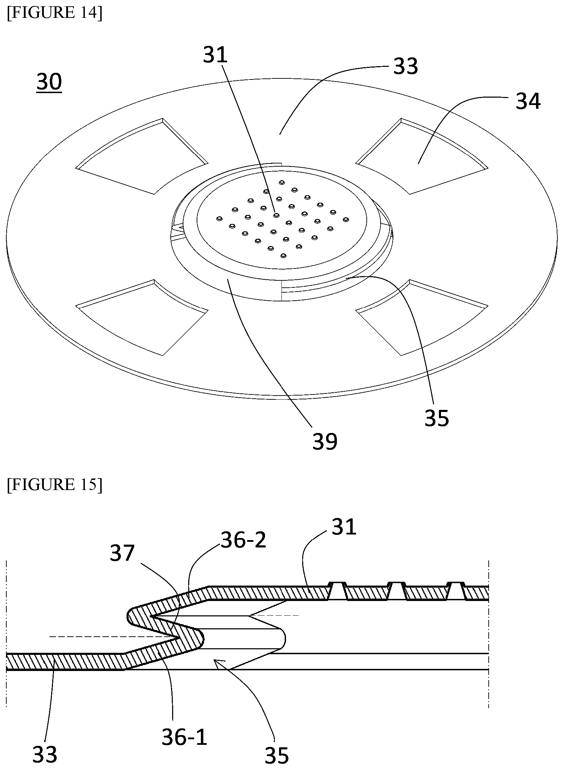

The first current collecting plate 30 according to the second embodiment will be described hereinafter with reference to FIGS. 14 and 15. In the following description of the embodiment, any descriptions that overlap with those of the previously described embodiment will be omitted.

According to the second embodiment of the first current collecting plate 30, the elastic connecting portion 35 includes: two first connecting sections 36-1 and 36-2 and one second connecting section 37.

The first connecting section 36 and the second connecting section 37 are alternately arranged along the extending direction.

In the elastic connecting portion 35, the outer radial end of the first connecting section 36-1 is connected to the inner radial end of the electrode joint 33.

In the elastic connecting portion 35, the inner radial end of the first connecting section 36-1 is connected to the inner radial end of the second connecting section 37.

In the elastic connecting portion 35, the outer radial end of the second connecting section 37 is connected to the outer radial end of the first connecting section 36-2.

In the elastic connecting portion 35, the inner radial end of the first connecting section 36-2 is connected to the outer radial end of the terminal joint 31.

The inner radial end of the first connecting section 36-2 may be disposed radially inner than that of the first connecting section 36-1.

Referring to the dotted line in FIG. 15, the shape of the elastic connecting portion 35 may be a type of spring structure in the axial direction.

### <THIRD EMBODIMENT>

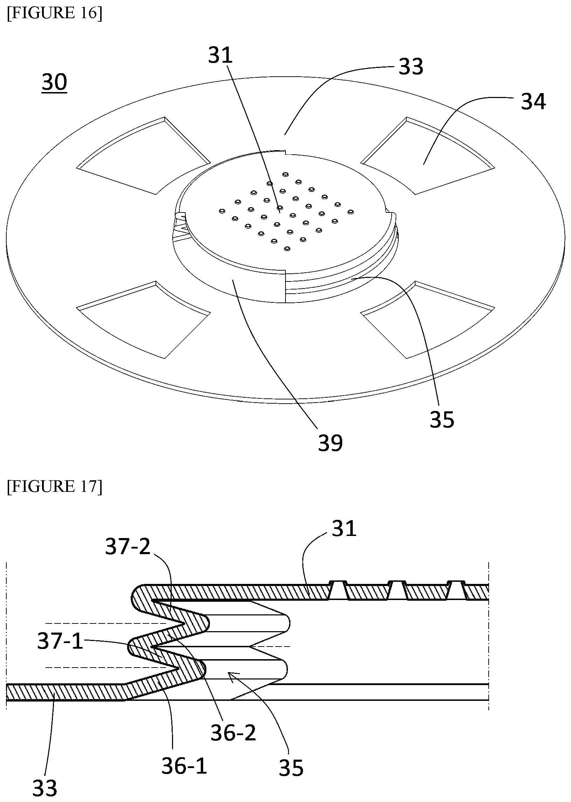

The first current collecting plate 30 according the third embodiment will be described hereinafter with reference to FIGS. 16 and 17.

According to the third embodiment of the first current collecting plate 30, the elastic connecting portion 35 includes two first connecting sections 36-1 and 36-2 and two second connecting sections 37-1 and 37-2.

The first connecting section 36 and the second connecting section 37 are alternately arranged along the extending direction.

In the elastic connecting portion 35, the outer radial end of the first connecting section 36-1 is connected to the inner radial end of the electrode joint 33.

In the elastic connecting portion 35, the inner radial end of the first connecting section 36-1 is connected to the inner radial end of the second connecting section 37-1.

In the elastic connecting portion 35, the outer radial end of the second connecting section 37-1 is connected to the outer radial end of the first connecting section 36-2.

In the elastic connecting portion 35, the inner radial end of the first connecting section 36-2 is connected to the inner radial end of the second connecting section 37-2.

In the elastic connecting portion 35, the outer radial end of the second connecting section 37-2 is connected to the outer radial end of the terminal joint 31.

The inner radial end of the first connecting section 36-2 may be disposed radially inner than that of the first connecting section 36-1.

The outer radial end of the second connecting section 37-2 may be disposed radially inner than that of the second connecting section 37-1.

Referring to the dotted line in FIG. 17, the shape of the elastic connecting portion 35 may be a type of spring structure in the axial direction.

### <FOURTH EMBODIMENT>

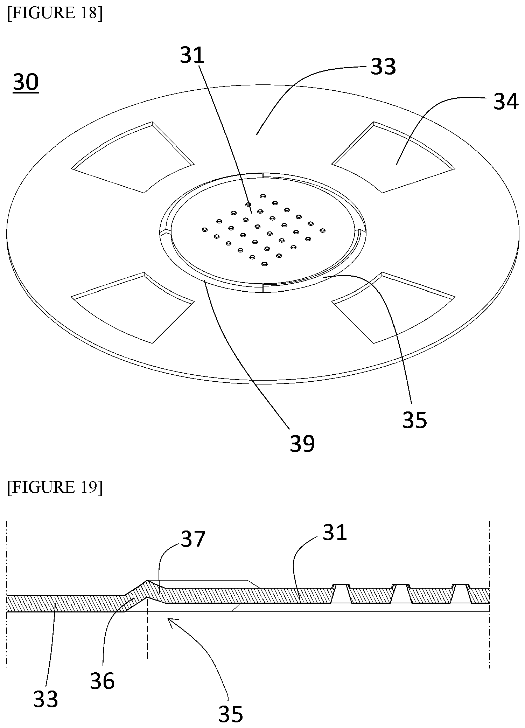

The first current collecting plate 30 according to the fourth embodiment will be described hereinafter with reference to FIGS. 18 and 19.

According to the fourth embodiment of the first current collecting plate 30, the elastic connecting portion 35 includes one first connecting section 36 and one second connecting section 37.

The first connecting section 36 and the second connecting section 37 are alternately arranged along the extending direction.

In the elastic connecting portion 35, the outer radial end of the first connecting section 36 is connected to the inner radial end of the electrode joint 33.

In the elastic connecting portion 35, the inner radial end of the first connecting section 36 is connected to the outer radial end of the second connecting section 37.

In the elastic connecting portion 35, the inner radial end of the second connecting section 37 is connected to the outer radial end of the terminal joint 31.

Referring to the dotted line in FIG. 19, the shape of the elastic connecting portion 35 may be a type of spring structure in the radial direction.

### <FIFTH EMBODIMENT>

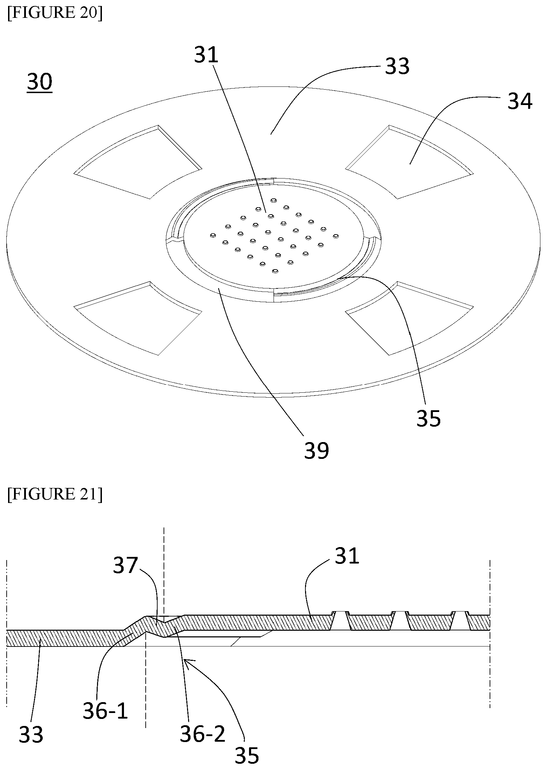

The first current collecting plate 30 according to the fifth embodiment will be described hereinafter with reference to FIGS. 20 and 21.

According to the fifth embodiment of the first current collecting plate 30, the elastic connecting portion 35 includes two first connecting sections 36-1 and 36-2 and one second connecting section 37.

The first connecting section 36 and the second connecting section 37 are alternately arranged along the extending direction.

In the elastic connecting portion 35, the outer radial end of the first connecting section 36-1 is connected to the inner radial end of the electrode joint 33.

In the elastic connecting portion 35, the inner radial end of the first connecting section 36-1 is connected to the outer radial end of the second connecting section 37.

In the elastic connecting portion 35, the inner radial end of the second connecting section 37 is connected to the outer radial end of the first connecting section 36-2.

In the elastic connecting portion 35, the inner radial end of the first connecting section 36-2 is connected to the outer radial end of the terminal joint 31.

The inner radial end of the first connecting section 36-1 may be disposed axially inner than that of the first connecting section 36-2.

Referring to the dotted line in FIG. 21, the shape of the elastic connecting portion 35 may be a type of spring structure in the radial direction.

### <SIXTH EMBODIMENT>

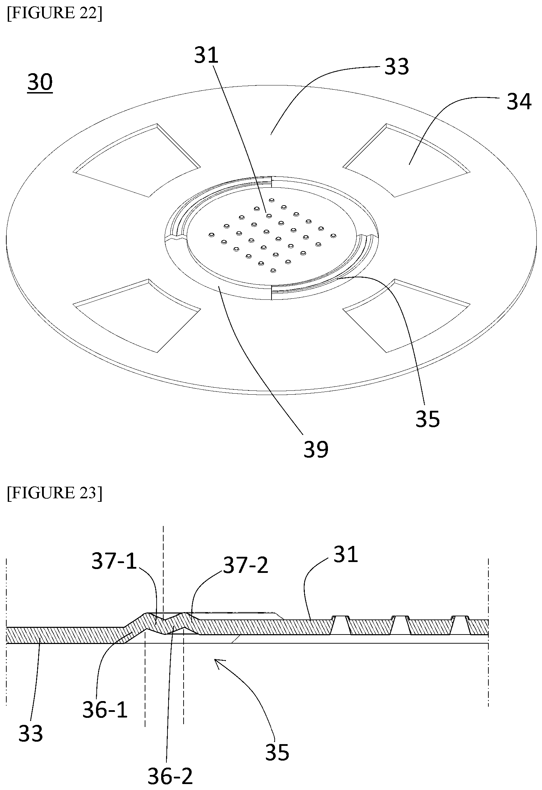

The first current collecting plate 30 according to the sixth embodiment will be described hereinafter with reference to FIGS. 22 and 23.

According to the sixth embodiment of the first current collecting plate 30, the elastic connecting portion 35 includes two first connecting sections 36-1 and 36-2 and two second connecting sections 37-1 and 37-2.

The first connecting section 36 and the second connecting section 37 are alternately arranged along the extending direction.

In the elastic connecting portion 35, the outer radial end of the first connecting section 36-1 is connected to the inner radial end of the electrode joint 33.

In the elastic connecting portion 35, the inner radial end of the first connecting section 36-1 is connected to the outer radial end of the second connecting section 37-1.

In the elastic connecting portion 35, the inner radial end of the second connecting section 37-1 is connected to the outer radial end of the first connecting section 36-2.

In the elastic connecting portion 35, the inner radial end of the first connecting section 36-2 is connected to the outer radial end of the second connecting section 37-2.

In the elastic connecting portion 35, the inner radial end of the second connecting section 37-2 is connected to the outer radial end of the terminal joint 31.

Referring to the dotted line in FIG. 23, the shape of the elastic connecting portion 35 may be a type of spring structure in the radial direction.

### <SEVENTH EMBODIMENT>

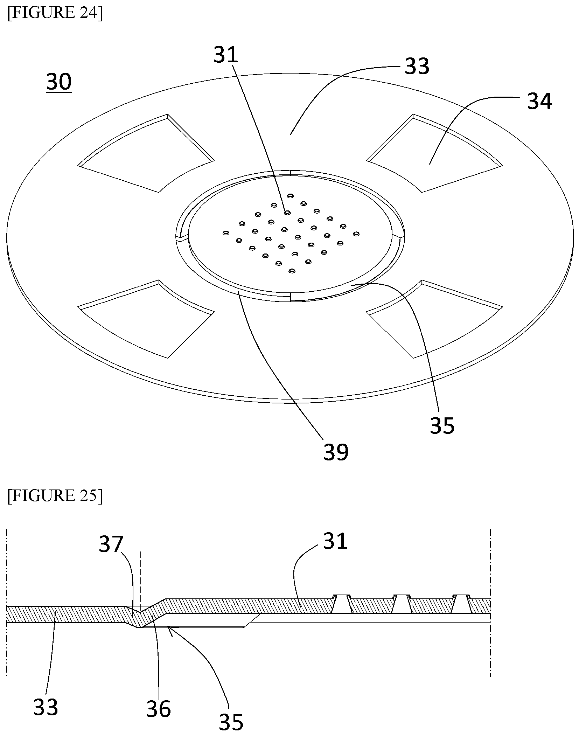

The first current collecting plate 30 according to the seventh embodiment will be described hereinafter with reference to FIGS. 24 and 25.

According to the seventh embodiment of the first current collecting plate 30, the elastic connecting portion 35 includes one second connecting section 37 and one first connecting section 36.

The second connecting section 37 and the first connecting section 36 are alternately arranged along the extending direction.

In the elastic connecting portion 35, the outer radial end of the second connecting section 37 is connected to the inner radial end of the electrode joint 33.

In the elastic connecting portion 35, the inner radial end of the second connecting section 37 is connected to the outer radial end of the first connecting section 36.

In the elastic connecting portion 35, the inner radial end of the first connecting section 36 is connected to the outer radial end of the terminal joint 31.

Referring to the dotted line in FIG. 25, the shape of the elastic connecting portion 35 may be a type of spring structure in the radial direction.

### <EIGHTH EMBODIMENT>

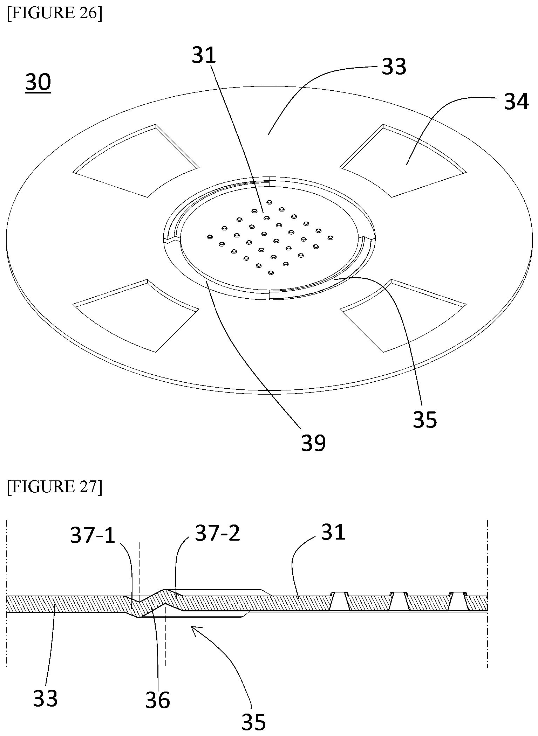

The first current collecting plate 30 according to the eighth embodiment will be described hereinafter with reference to FIGS. 26 and 27.

According to the eighth embodiment of the first current collecting plate 30, the elastic connecting portion 35 includes two second connecting sections 37-1 and 37-2 and one first connecting section 36.

The second connecting section 37 and the first connecting section 36 are alternately arranged along the extending direction.

In the elastic connecting portion 35, the outer radial end of the second connecting section 37-1 is connected to the inner radial end of the electrode joint 33.

In the elastic connecting portion 35, the inner radial end of the second connecting section 37-1 is connected to the outer radial end of the first connecting section 36.

In the elastic connecting portion 35, the inner radial end of the first connecting section 36 is connected to the outer radial end of the second connecting section 37-2.

In the elastic connecting portion 35, the inner radial end of the second connecting section 37-2 is connected to the outer radial end of the terminal joint 31.

Referring to the dotted line in FIG. 27, the shape of the elastic connecting portion 35 may be a type of spring structure in the radial direction.

The second embodiment of the cylindrical battery cell described below is exemplified with the eighth embodiment of the first current collecting plate applied thereto.

### <NINTH EMBODIMENT>

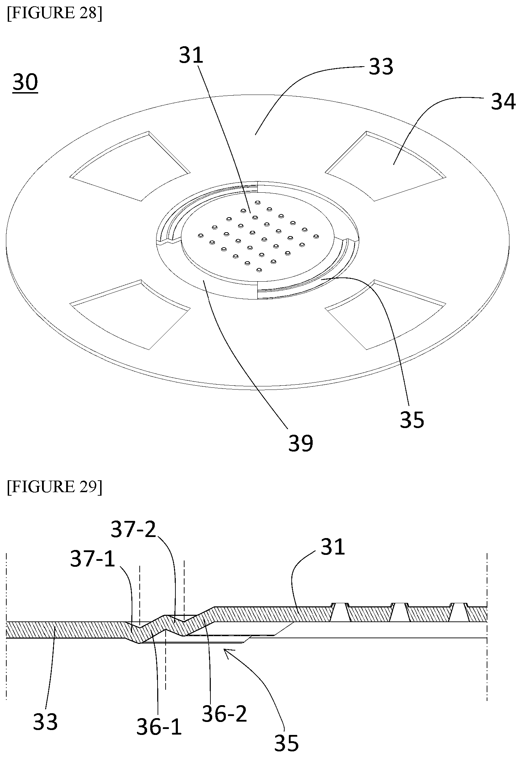

The first current collecting plate 30 according to the ninth embodiment will be described hereinafter with reference to FIGS. 28 and 29.

According to the ninth embodiment of the first current collecting plate 30, the elastic connecting portion 35 includes two second connecting sections 37-1 and 37-2 and two first connecting sections 36-1 and 36-2.

The second connecting section 37 and the first connecting section 36 are alternately arranged along the extending direction.

In the elastic connecting portion 35, the outer radial end of the second connecting section 37-1 is connected to the inner radial end of the electrode joint 33.

In the elastic connecting portion 35, the inner radial end of the second connecting section 37-1 is connected to the outer radial end of the first connecting section 36-1.

In the elastic connecting portion 35, the inner radial end of the first connecting section 36-1 is connected to the outer radial end of the second connecting section 37-2.

In the elastic connecting portion 35, the inner radial end of the second connecting section 37-2 is connected to the outer radial end of the first connecting section 36-2.

In the elastic connecting portion 35, the inner radial end of the first connecting section 36-2 is connected to the outer radial end of the terminal joint 31.

The inner radial end of the first connecting section 36-2 may be disposed axially outer than that of the first connecting section 36-1.

The inner radial end of the second connecting section 37-2 may be disposed axially outer than that of the second connecting section 37-1.

Referring to the dotted line in FIG. 29, the shape of the elastic connecting portion 35 may be a type of spring structure in the radial direction.

### <TENTH EMBODIMENT>

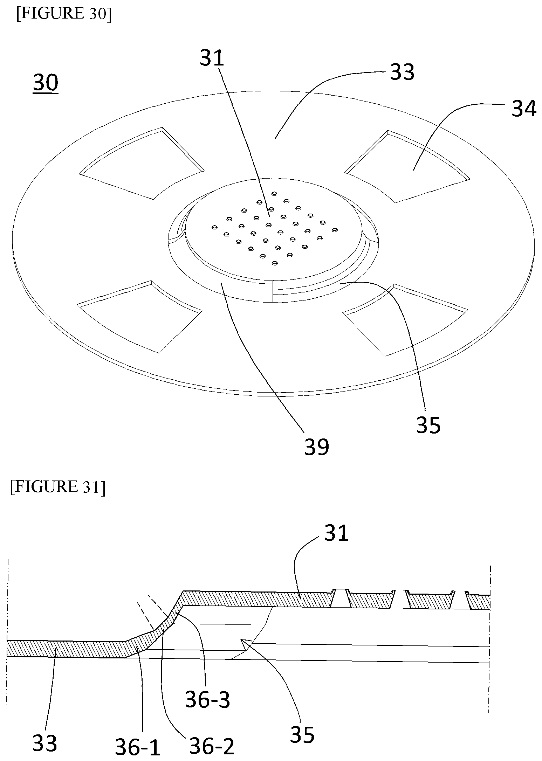

The first current collecting plate 30 according to the tenth embodiment will be described hereinafter with reference to FIGS. 30 and 31.

According to the tenth embodiment of the first current collecting plate 30, the elastic connecting portion 35 includes a plurality of first connecting sections 36-1, 36-2 and 36-3. Three first connecting sections are exemplified in the embodiment. Two or four first connecting sections may also be provided.

In the elastic connecting portion 35, the outer radial end of the first connecting section 36-1 is connected to the inner radial end of the electrode joint 33.

In the elastic connecting portion 35, the inner radial end of the first connecting section 36-1 is connected to the outer radial end of the first connecting section 36-2.

In the elastic connecting portion 35, the inner radial end of the first connecting section 36-2 is connected to the outer radial end of the first connecting section 36-3.

In the elastic connecting portion 35, the inner radial end of the first connecting section 36-3 is connected to the outer radial end of the terminal joint 31.

The slopes of the first connecting sections may be defined as the axial extension distance relative to the radial extension distance. That is, when the axial extension distance is longer than the same radial extension distance, the slope is understood to be greater or steeper.

In the tenth embodiment, the slopes of the first connecting sections 36-1, 36-2 and 36-3 gradually increase along the extending direction.

Referring to the dotted line in FIG. 31, the shape of the elastic connecting portion 35 is similar to an arc having a center disposed both axially and radially outer than the terminal joint 31.

### <ELEVENTH EMBODIMENT>

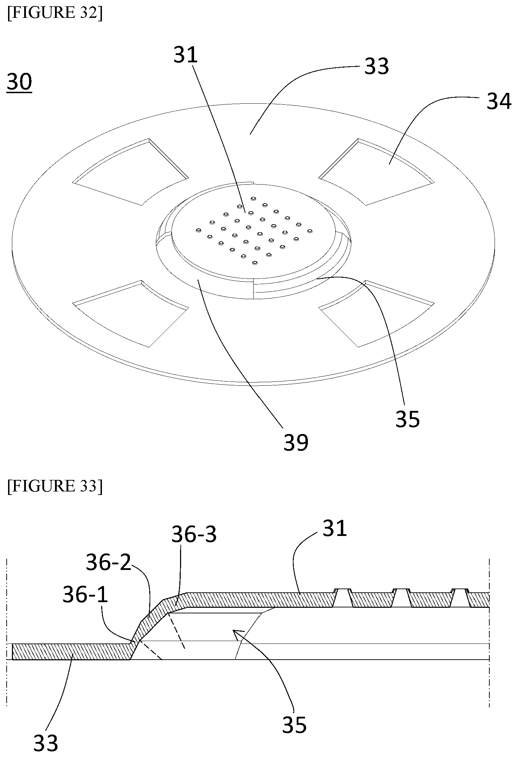

The first current collecting plate 30 according to the eleventh embodiment will be described hereinafter with reference to FIGS. 32 and 33.

According to the eleventh embodiment of the first current collecting plate 30, the elastic connecting portion 35 includes three first connecting sections 36-1, 36-2 and 36-3.

In the eleventh embodiment, the slopes of the first connecting sections 36-1, 36-2 and 36-3 gradually decrease along the extending direction.

Referring to the dotted line in FIG. 33, the shape of the elastic connecting portion 35 is similar to an arc having a center disposed axially inner than the terminal joint 31 and radially inner than the electrode joint 33.

### <TWELFTH EMBODIMENT>

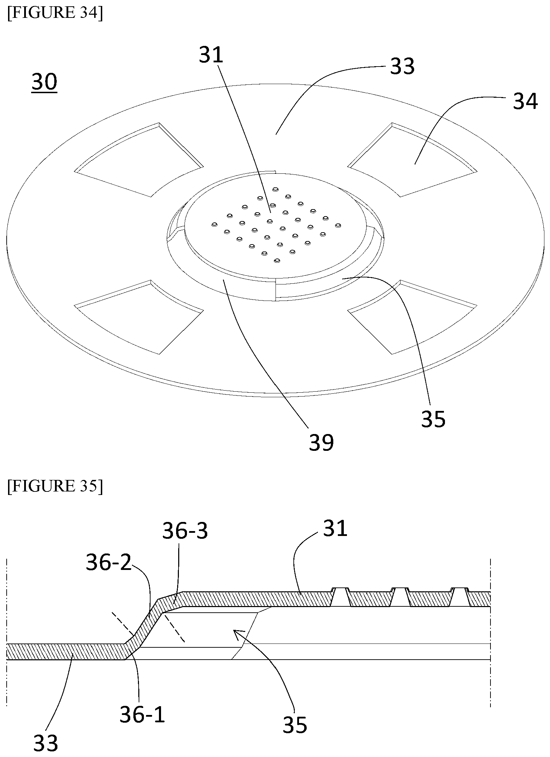

The first current collecting plate 30 according to the twelfth embodiment will be described hereinafter with reference to FIGS. 34 and 35.

According to the twelfth embodiment of the first current collecting plate 30, the elastic connecting portion 35 includes three first connecting sections 36-1, 36-2 and 36-3.

In the twelfth embodiment, the slopes of the first connecting sections 36-1, 36-2 and 36-3 increase and decrease repeatedly along the extending direction. That is, the slope of the first connecting section 36-2 increases compared to the first connecting section 36-1, and the slope of the first connecting section 36-3 decreases compared to the first connecting section 36-2.

Referring to the dotted line in FIG. 35, the shape of the elastic connecting portion 35 may be a type of diagonal spring structure.

### [CYLINDRICAL BATTERY CELL - SECOND EMBODIMENT]

The various embodiments of the first current collecting plates 30 described above may be applied not only to the first embodiment of the cylindrical battery cell described above, but also to the second embodiment described below.

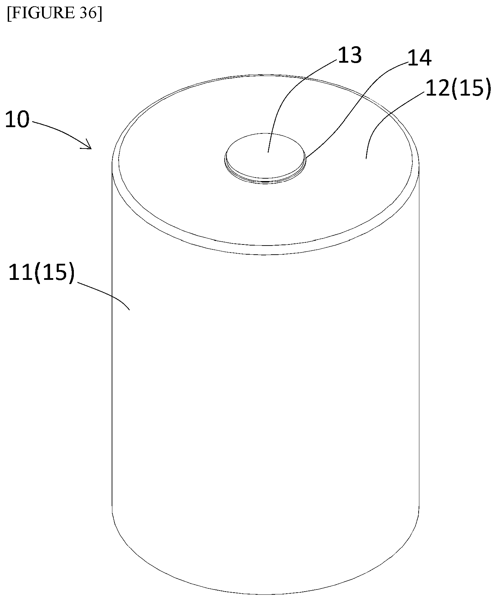

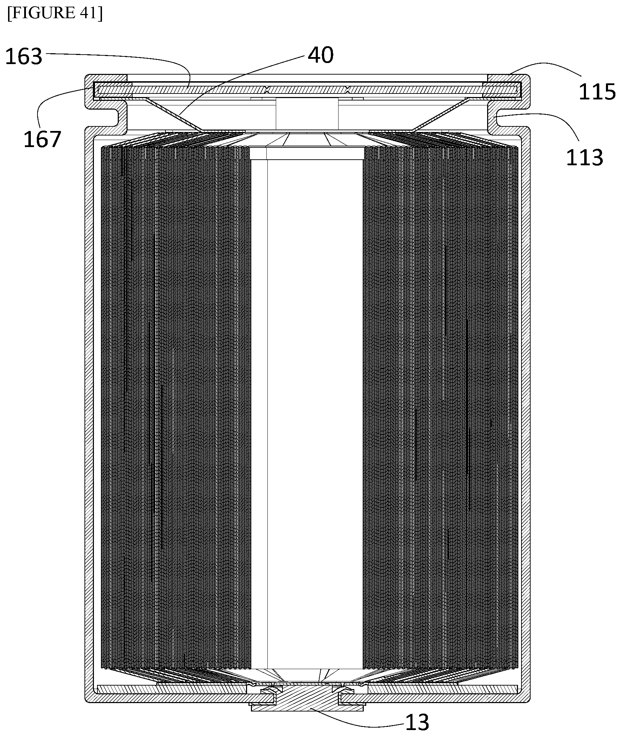

Hereinafter, the cylindrical battery cell according to the second embodiment of the present invention will be described with reference to FIGS. 36 to 41. In the following description, any descriptions that overlap with those of the first embodiment will be omitted.

The can 10 of the battery cell according to the second embodiment includes: a bottom member 12; a sidewall member 11 extending in axial direction and connected to the bottom member 12; and a vent 163 covering the open end provided at the first axial end of the sidewall member 11.

The bottom member 12 has a disc shape with a hole provided in the center.

A first electrode terminal 13 may be fitted into the hole. The first electrode terminal 13 may be riveted and fixed to the bottom member 12 with a gasket 14 interposed therebetween. The gasket 14 is interposed between the first electrode terminal 13 and the bottom member 12, sealing the can 10 to prevent electrolyte leakage and electrically insulate the first electrode terminal 13 from the bottom member 12.

However, the connection method between the first electrode terminal 13 and the bottom member 12 is not limited thereto. For example, as long as the structure seals the space between and electrically insulate the first electrode terminal 13 and the bottom member 12, various other fixing methods such as bolt-and-nut joints, glass seals, or chrome coating and PP-MAH thermal bonding may also be applied.

The first electrode terminal 13 may have first polarity, and the can 10 may have second polarity. That is, both the bottom member 12 of the can 10 and the sidewall member 11 connected thereto may have second polarity.

Accordingly, the battery cell may have both the first electrode terminal 13 and the second electrode terminal 15 located at the axial end, i.e., the closed end, provided with the bottom member 12, as illustrated in FIG. 36. As a result, the battery cell may have both the bus bar connected to the first electrode terminal 13 and the bus bar connected to the second electrode terminal 15 located at the upper portion of the battery cell.

In one embodiment, the first electrode terminal 13 may be the anode terminal, and the second electrode terminal 15 may be the cathode terminal, or vice versa.

The notched tabs 27 of the first electrode 21 and the notched tabs 27 of the second electrode 22 of the electrode assembly 20 that are folded and overlapped in the radial direction may provide planes substantially perpendicular to the axial direction at two axial ends of the electrode assembly 20, respectively.

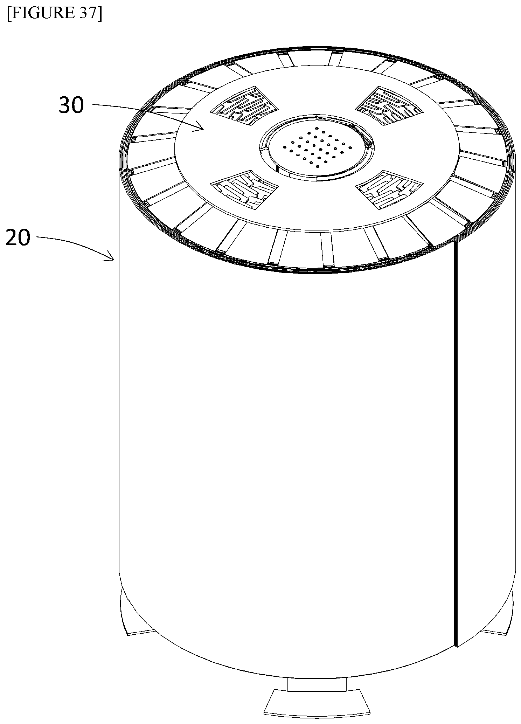

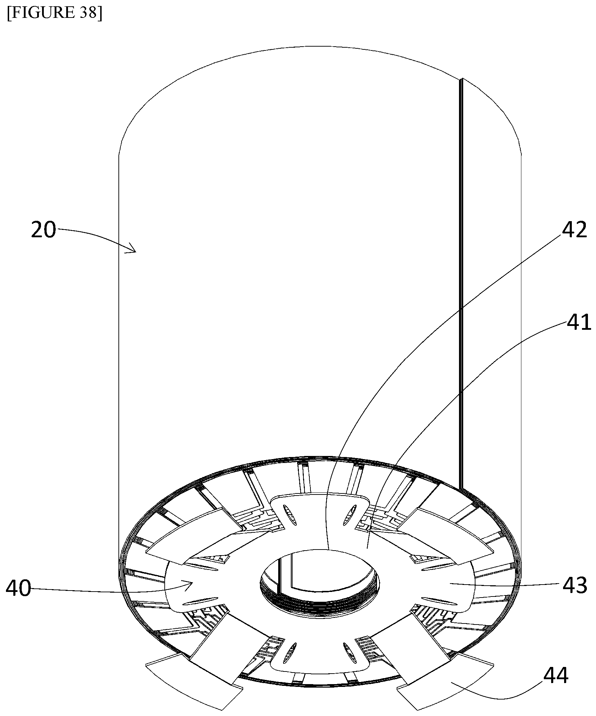

As shown in FIGS. 37 and 38, the first current collecting plate 30 and the second current collecting plate 40 may be bonded to the substantially flat surfaces provided by the bent notched tabs 27 exposed at the two axial ends of the electrode assembly 20, respectively.

In the embodiment, the first current collecting plate 30 is an anode current collecting plate, and the second current collecting plate 40 is a cathode current collecting plate.

Referring to FIG. 38, the second collector plate 40 includes: an inner ring part 41 that defines a hole 42 corresponding to the core hollow portion 29 of the electrode assembly 20 and surrounds the core hollow portion; an electrode connecting part 43 extending radially from the inner ring part 41, and a can connecting part 44 positioned distally relative to the electrode tab connecting part 43 and connected to the inner ring part 41.

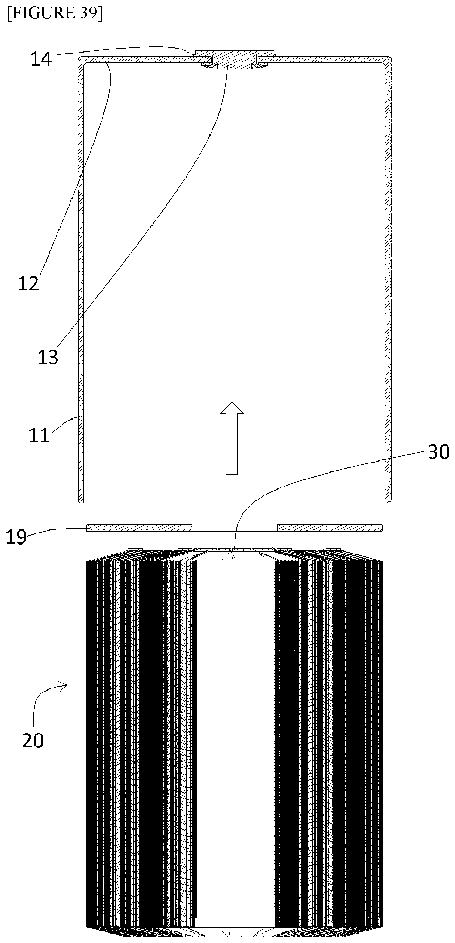

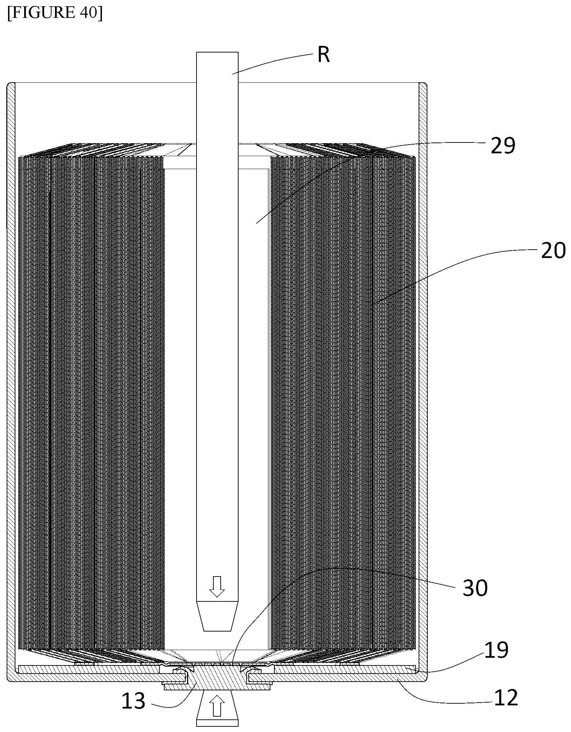

As shown in FIGS. 39 and 40, the electrode assembly 20 is accommodated in the can 10 with the first current collecting plate 30 facing the bottom member 12 of the can 10. Here, an insulator 19 is interposed between the first current collecting plate 30 and the bottom member 12 of the can 10 to electrically insulate the first current collecting plate 30 from the bottom member 12.

In addition, the terminal joint 31 of the first current collecting plate 30 is bonded to the first electrode terminal 13 fixed to the bottom 12 by resistance welding, ultrasonic welding or laser welding. The welding device for welding the first current collecting plate 30 to the first electrode terminal 13 may be used to approach the back surface of the center of the terminal joint 31 of the first current collecting plate 30 through the core hollow portion 29 of the electrode assembly 20 from the open end of the can 10. Apparently, the first current collecting plate 30 and the first electrode terminal 13 may also be bonded using other methods such as brazing or soldering. That is, any method that electrically connects and fixes the first current collecting plate 30 and the first electrode terminal 13 may be applied.

FIGS. 39 and 40 illustrate insertion of the electrode assembly 20 into the can 10 without the second collector plate 40 bonded to the electrode assembly 20. However, as shown in FIG. 38, it is also possible to insert the electrode assembly 20 into the can 10 with the second collector plate 40 bonded to the electrode assembly 20.

With the electrode assembly 20 accommodated in the can 10, the electrode tab 27 of the second electrode 22 and the second collector plate 40 are arranged so as to face the open end of the sidewall member 11.

With the electrode assembly 20 accommodated in the can 10, the end of the sidewall member 11 of the can 10 may be recessed inward to form a beading 113. Furthermore, welding may be performed with the can connecting portion 44 of the second collector plate 40 in contact with the beading 113.

After the electrolyte is injected into the can 10, the vent 163 may be placed over the beading 113 and crimped to cover the open end of the can 10. Here, a gasket 167 may be interposed between the beading 113 and crimped portion 115 of the sidewall member 11 and the vent 163, thereby forming an insulating seal. Accordingly, the vent 163 may not have a polarity.

In detail, the first current collecting plate 30 may be a bottom-side current collecting plate facing the bottom 12 of the can 10, and the second collector plate 40 may be an open-end-side current collecting plate facing the open end of the can 10.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A current collecting plate comprising:
a terminal joint having a first side surface bonded to a cap, can bottom or electrode terminal;
an electrode joint surrounding the terminal joint from a radially outer side of the terminal joint and having a second side surface bonded to an electrode tab of an electrode assembly;
an elastic connecting portion disposed between the electrode joint and the terminal joint to electrically connect the electrode joint and the terminal joint; and
an open portion disposed between circumferentially adjacent elastic connecting portions and separating the electrode joint and the terminal joint in radial or axial direction,
wherein the elastic connecting portion comprises at least one of:
a first connecting section provided with an outer radial end and an inner radial end and extending radially inward toward a first axial side (axially outer side); and
a second connecting section provided with an outer radial end and an inner radial end and extending radially inward toward a second axial side (axially inner side).

2. The current collecting plate of claim 1, wherein the first connecting section and the second connecting section of the elastic connecting portion are alternately arranged as the elastic connecting portion extends from the electrode joint toward the terminal joint.

3. The current collecting plate of claim 2, wherein the inner radial ends of the first and second connecting sections adjacent to each other along an extending direction of the elastic connecting portion are connected to each other.

4. The current collecting plate of claim 3, wherein the outer radial ends of the first and second connecting sections adjacent to each other along the extending direction of the elastic connecting portion are connected to each other.

5. The current collecting plate of claim 2, wherein the inner radial end of the first connecting section and the outer radial end of the second connecting section adjacent to each other along an extending direction of the elastic connecting portion are connected to each other.

6. The current collecting plate of claim 5, wherein the inner radial end of the second connecting section and the outer radial end of the first connecting section adjacent to each other along the extending direction of the elastic connecting portion are connected to each other.

7. The current collecting plate of claim 1, wherein the second connecting section and the first connecting section of the elastic connecting portion are alternately arranged as the elastic connecting portion extends from the electrode joint toward the terminal joint.

8. The current collecting plate of claim 7, wherein the inner radial end of the second connecting section and the outer radial end of the first connecting section adjacent to each other along the extending direction of the elastic connecting portion are connected to each other.

9. The current collecting plate of claim 8, wherein the inner radial end of the first connecting section and the outer radial end of the second connecting section adjacent to each other along the extending direction of the elastic connecting portion are connected to each other.

10. The current collecting plate of claim 1, wherein the first connecting section of the elastic connecting portion having different slopes are arranged as the elastic connecting portion extend from the electrode joint toward the terminal joint.

11. The current collecting plate of claim 10, wherein the different slopes of the first connecting section increase gradually along an extending direction.

12. The current collecting plate of claim 10, wherein the different slopes of the first connecting sections decrease gradually in an extending direction.

13. The current collecting plate of claim 10, wherein the different slopes of the first connecting sections repeatedly increase and decrease in an extending direction.

14. The current collecting plate of claim 1, wherein the terminal joint comprises a flat plate shape.

15. The current collecting plate of claim 1, wherein the terminal joint comprises a flat annular plate shape.

16. A battery cell comprising:
a can provided with a bottom member and a sidewall member;
an electrode assembly accommodated in the can;
a cap covering an open end of the can with the electrode assembly accommodated in the can;
an electrode terminal; and
a current collecting plate according to any one of claims 1 to 15 provided with: a first side surface bonded to the cap, the bottom member of the can or the electrode terminal; and a second side surface electrically connected to an electrode tab provided at a first axial side of the electrode assembly.

17. The battery cell of claim 16, wherein the battery cell is cylindrical.

18. The battery cell of claim 16, wherein the electrode terminal is provided at the cap.

19. The battery cell of claim 16, wherein the electrode terminal is insulated from and fixed to the bottom member.
